# EUROPEAN PATENT APPLICATION

(11) **EP 1 398 923 A2**
(43) Date of publication of application: **17.03.2004**
(21) Application number: 03020393.9
(22) Date of filing: 10.09.2003
(51) Int. Cl.: H04L 12/56

(54) **Routing patterns for avoiding congestion in networks that convert between circuit-switched and packet switched traffic**

(30) Priority: 10.09.2002 US 238201
(71) Applicant: ALCATEL, 75008 Paris (FR)
(72) Inventor: Tinney, John M., 75230 Dallas (US); Hao, Tianbao, Plano Texas 75025 (US); Bartz, Stephen P., 75048 Sachse Texas (US); Kubala, Robert J., Plano Texas 75023 (US)
(74) Representative: Dreiss, Fuhlendorf, Steimle & Becker

(57) **Abstract**

The present invention governs the order of destination nodes to which each node will send by establishing an individual circular output routing scheme for each node based on that node's unique identifier, thereby evenly distributing node traffic. The output routing scheme for each node can begin with the next incrementally higher node identifier. The output routing scheme can be built by incrementing the node identifiers until the highest node identifier is reached. The lowest node identifier follows the highest node identifier. Then, the node identifiers are again incremented until the sending node's identifier is reached. Each node can iteratively follow its own output routing scheme.

## Description

### FIELD OF THE INVENTION

The invention relates generally to telecommunications and, more particularly, to the problem of congestion in networks that convert between circuit-switched and packet-switched traffic.

### BACKGROUND OF THE INVENTION

Due to its technical advancement and relatively low cost, packet switch (e.g., Ethernet) is increasingly used to replace traditional circuit matrices for time division multiplexing (TDM) switching, such as pulse code modulation (PCM). Such systems typically consist of several nodes connected by packet switches. Each node exchanges TDM data with both the circuit interface and the packet interface.

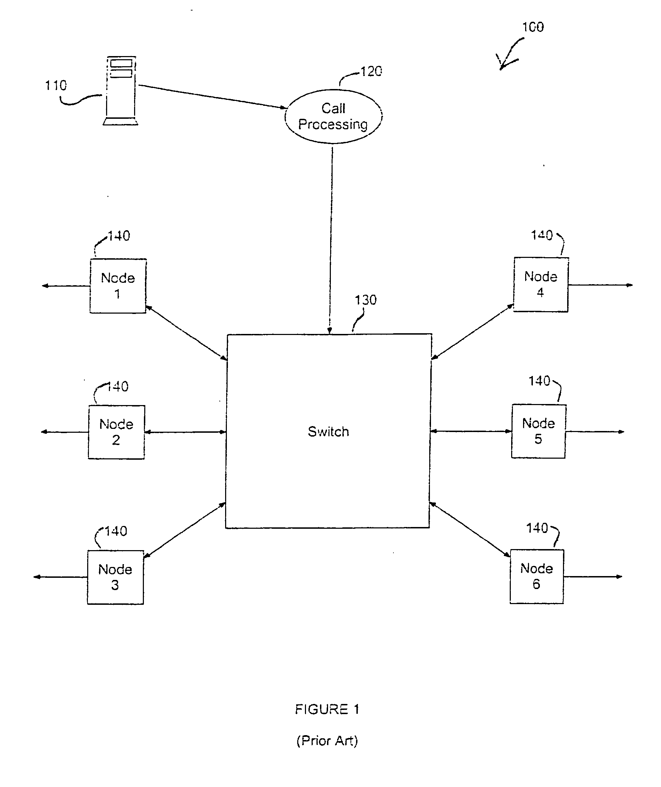

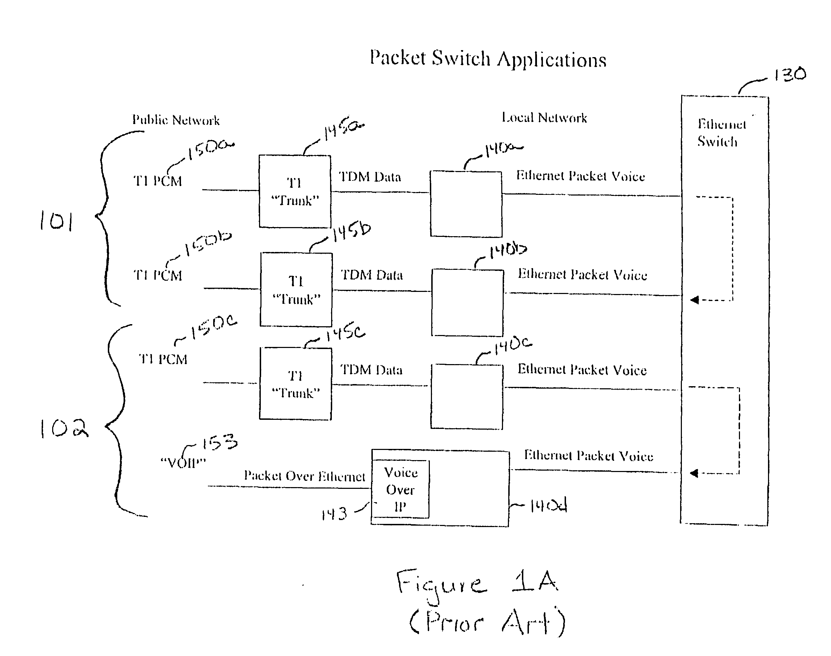

FIGURE 1 diagrammatically illustrates a simple switching network **100** in accordance with the art. Server **110** is tied into call processing **120**. Server **110** sends command packets, which are not bearer traffic, through call processing **120** into switch **130**. The command packets notify nodes **140** about any connections and tell nodes **140** when to commence sending and when to stop. Nodes **140** function as both traffic inputs and outputs.

The ultimate destination of all TDM traffic is inter-office trunks to the public telephone network or IP connections to a public or private IP network. For incoming TDM traffic, in the case of an Ethernet switch **130**, each node **140** receives synchronous TDM data, encapsulates the TDM data into Ethernet frames and sends the frames to destination nodes **140** asynchronously, through the underlying Ethernet switching capability. For outgoing traffic, each node **140** extracts the TDM data from the asynchronously received Ethernet frames and sends the TDM data synchronously in circuit mode.

FIGURE 1A diagrammatically illustrates some exemplary packet switch applications. Exemplary application **101** diagrammatically illustrates a TDM to TDM connection using Ethernet switch **130** as a switching element. PCM **150a** sends data to T1 **145a**. TDM data from T1 **145a** is sent through node **140a**, where the TDM data is encapsulated into Ethernet frames and sent through Ethernet switch **130** to node **140b**. Node **140b** extracts the TDM data and sends it through T1 **145b** to PCM **150b**. Exemplary application **102** diagrammatically illustrates an Ethernet voice facility to T1 TDM channel connection. The difference between application **101** and application **102** is that node **140d** must be able to include voice over internet protocol (VOIP) **143** in its packetizing in order to successfully communicate with VOIP **153**.

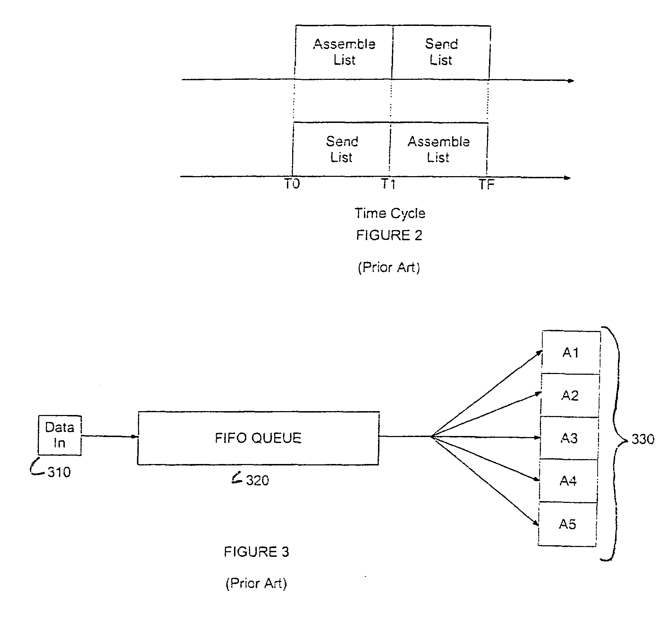

A current challenge is the coordination of the asynchronous (random) nature of packet traffic with the strictly timed synchronous TDM data. FIGURE 2 illustrates a timing sequence in accordance with the art. As seen in FIGURE 2, there are actually two (2) overlapping processes: an assemble and a send. At the same time a node is writing (assembling) a page or block, it is also sending one out. This is usually done in the form of paging. There is a "write" page and a "read" page that are "flipped" back and forth, thereby eliminating contention. However, there is a specific window of time imposed by the TDM technology, and the processors have a finite capability of handling data within that time. For example, when a node is the last to receive Ethernet frames from all the other nodes, that node might not have enough time to process the Ethernet frames within the required timeframe. Additionally, if many nodes try to send Ethernet frames to the same destination node simultaneously, the Ethernet link to this destination node may become congested, while the Ethernet links to the other nodes will be under-utilized. The traffic may overflow the congested node's buffers, resulting in data loss. Furthermore, a node may receive packets so late in the packet to PCM translation period that it fails to deliver the PCM data "in time" to its PCM output. This problem affects the efficient use of both processing and transmission capacity.

Prior art solutions have attempted to remedy this in one of two ways. The first solution randomizes the packet sending order. Although this solution may mitigate the persistent problem of transmission congestion and poor utilization of processing and transmission capacity, it cannot prevent the problem. The second solution manages the sending order at a "management node" that has a global view of all the connections. This second solution increases cost and complexity. The algorithm required by the management node needs to be individually designed. Additionally, the management node may not be fast enough to cope with the dynamic changes of TDM connections.

It is therefore desirable to provide a solution that efficiently and economically enables each node to send and receive packets in a manner that meets the strict timing requirements of TDM traffic. The present invention can provide this by using each node's unique identifier to establish individual circular output routing schemes. In some embodiments, the output routing scheme for each node begins with an identifier that is incrementally higher than and adjacent to the sending node's identifier. The output routing scheme is built by incrementing the node identifiers until the highest node identifier is reached. The lowest node identifier follows the highest node identifier. Then, the node identifiers are again incremented until the sending node's identifier is reached. Each node can iteratively follow its own output routing scheme, for example, always beginning by sending to the next incrementally higher node identifier, thereby evenly distributing node traffic.

### BRIEF DESCRIPTION OF THE DRAWINGS

The above and further advantages of the invention may be better understood by referring to the following description in conjunction with the accompanying drawings in which corresponding numerals in the different figures refer to the corresponding parts, in which:
- FIGURE 1: diagrammatically illustrates a simple switching network in accordance with the art;
- FIGURE 1A: diagrammatically illustrates some exemplary packet switch applications in accordance with the art;
- FIGURE 2: illustrates a timing sequence in accordance with the art;
- FIGURE 3: diagrammatically illustrates packet queuing within a node of a switching network in accordance with the art;
- FIGURE 4: diagrammatically illustrates collisions within a switch;
- FIGURE 5: tabularizes an output routing scheme in accordance with an exemplary embodiment of the present invention;
- FIGURE 6: diagrammatically illustrates pertinent portions of exemplary embodiments of a circuit switch/packet switch node according to the present invention; and
- FIGURE 7: diagrammatically illustrates an output routing scheme in accordance with an exemplary embodiment of the present invention.

### DETAILED DESCRIPTION

While the making and using of various embodiments of the present invention are discussed herein in terms of specific node identifiers and increments, it should be appreciated that the present invention provides many inventive concepts that can be embodied in a wide variety of contexts. The specific embodiments discussed herein are merely illustrative of specific ways to make and use the invention, and are not meant to limit the scope of the invention.

The present invention governs the order of destination nodes to which each node will send by establishing an individual circular output routing scheme for each node based on that node's unique identifier, thereby evenly distributing node traffic. In some embodiments, the output routing scheme for each node begins with the next incrementally higher node identifier. The output routing scheme is built by incrementing the node identifiers until the highest node identifier is reached. The lowest node identifier follows the highest node identifier (wrap around). Then, the node identifiers are again incremented until the sending node's identifier is reached. Each node can iteratively follow its own output routing scheme, always beginning by sending to the next incrementally higher node identifier.

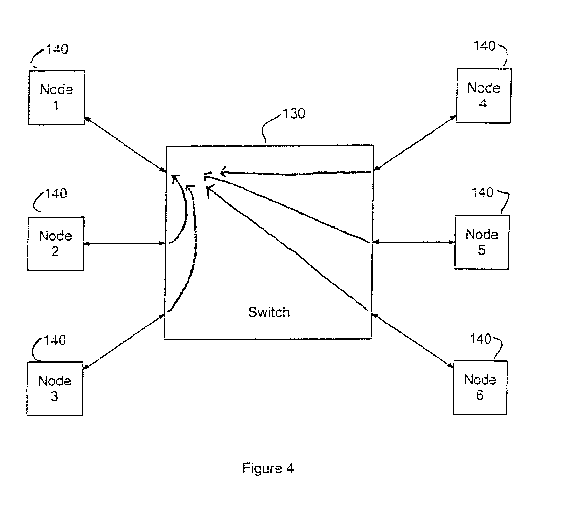

FIGURE 3 diagrammatically illustrates packet queuing within a node of a switching network **100** in accordance with the art. Data **310**, such as PCM voice samples, enters a node (assume node 6 of FIGURE 1 for this example) where it is queued, such as in a FIFO queue **320**, for processing. The node takes the data from queue **320** and "sorts" the data into "address boxes" **330**. For example, a byte of data in queue **320** destined for node **3** would be copied from queue **320** into address box **A3**, the address box designated for node 3 delivery. Each node sends the data in its address boxes **330** to the corresponding destination nodes. Without a regulated output sequence, it is possible that all nodes could begin by outputting to the same node, such as node 1, as illustrated in FIGURE 4. In FIGURE 4, a simple switching network of six (6) nodes **140** is shown with nodes **2-6** outputting to node **1** through switch **130**. For example, there may be, at a given instant in time, ten (10) packets queued up within switch **130** that are headed for a specific node **140**. These packets will be delivered to their destination node **140** in a "first come, first served" basis. However, if the traffic to each of nodes **140** is not evenly distributed, a node **140** may receive its data packets too late in the processing cycle to allow it to complete its required processing within the specified timeframe. Furthermore, although switch **130** provides some queuing capability it cannot, of course, hold all of the data. If the queue of switch **130** becomes full because of a bottleneck at a destination node **140**, data will be lost. In this case, not only have the buffers of destination node **140** become overrun, but the buffers of switch **130** have also become overrun. The present invention regulates the order in which each node **140** selects an address box **330** from which to output.

Typically, each node is assigned a unique node number, N, for internal communication purposes. The present invention uses each node's unique number, N, to determine a starting output node. In some embodiments, each node, N, will send to other nodes with incrementally higher node numbers starting with, for example, node (N+1), wrapping around from the highest node number to the lowest. The output order would then be: (N + 1), (N + 2), ... M, 0, 1, 2, ..., (N - 2) and (N -1), where M is the highest node number in the system. This sending order is optimal in the utilization of processing and link transmission capacity. Each node is autonomous; no management node is needed. Each node knows exactly which nodes to send to at all times. Therefore, the transmission capacity of the link is efficiently used from the beginning of the timeframe, leaving the maximum amount of time for nodes to process the packets (e.g., Ethernet frames). The traffic is evenly distributed across all the nodes, all the time. Thus, the present invention provides the highest probability that each node can meet the strict timing requirements of TDM traffic.

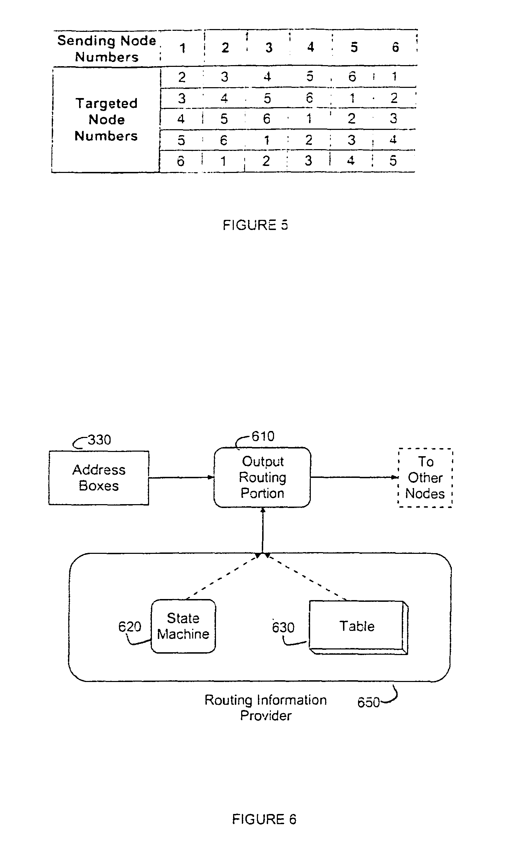

Although switching networks have many hundreds of nodes, a simple example containing only six (6) nodes can be used to illustrate the present invention. FIGURE 5 tabularizes an output routing scheme in accordance with an exemplary embodiment of the present invention for such a simple network. The first row of FIGURE 5 (designated Sending Node Numbers) lists the sending nodes. The remaining rows (designated Targeted Node Numbers) list the destination nodes. The second row lists the first node to which each Sending Node will send. The order of destination nodes for each Sending Node is determined by moving row by row down a column for a given Sending Node. For example, node 3 will output in the following order: 4, 5, 6, 1, 2. Another example output sequence for node 3 would be: 2, 1, 6, 5, 4. In this case, the other nodes would also sequence analogously, from the next lower identifier, decrementing and wrapping around to the next higher identifier. Either order can be repeated indefinitely until node 3 has delivered all of its output packets.

In general, the output sequence for each node can progress through the identifiers of the remaining nodes in any desired pattern, so long as, at any given time, each sending node is sending to another node whose identifier differs from its own identifier by an amount that is the same (also accounting for wrap around) for all sending nodes at that time. Thus, the first identifier in the send sequence need not be adjacent to the send node's identifier, and the remaining identifiers can be progressed through in any pattern, so long as: (1) each node first sends to another node whose identifier is offset (e.g. differs numerically) from its own identifier by a globally common amount and (2) each node thereafter progresses though the remaining identifiers according to a pattern that is common to all nodes.

FIGURE 6 diagrammatically illustrates pertinent portions of exemplary embodiments of a circuit switch/packet switch node according to the present invention. The data in address boxes **330** is ready for delivery. Output routing portion **610** sends the data from address boxes **330** to the corresponding nodes. Routing information provider **650** controls output routing portion **610** by telling output routing portion **610** when to send the data from the various address boxes **330**. In some embodiments, output routing portion **610** includes a selector such as a multiplexer, with data inputs coupled to the respective address boxes and a control input coupled to routing information provider **650**. Routing information provider **650** may be provided in the form of a counter **620**, a table **630** such as in FIGURE 5, or any other suitable mechanism capable of signalling the output sequence, e.g. one of the sequences of FIGURE 5, to the output routing portion **610**.

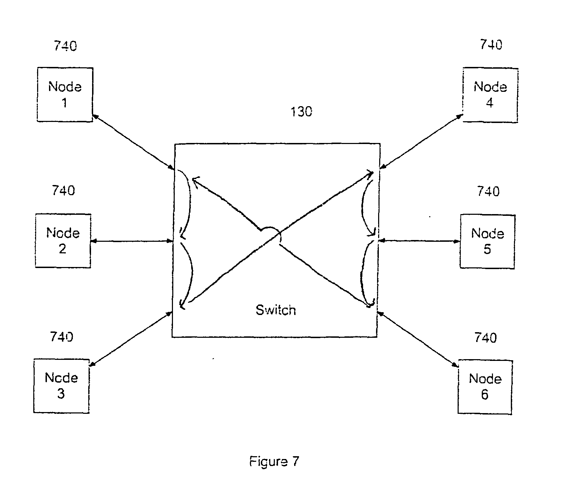

The result of implementing the present invention on a simple, six (6) node network is diagrammatically illustrated by FIGURE 7. Each node **740** is shown outputting through switch **130** in accordance with the second row of FIGURE 5. In this example, the next round of node **740** to node **740** links would be: 1 to 3, 2 to 4, 3 to 5, 4 to 6, 5 to 1 and 6 to 2, corresponding to row 3 of FIGURE 5. Nodes **740** will not simultaneously output to a single node **740**, as shown in FIGURE 4, thereby avoiding bottlenecks and their related data loss. Each node **740** is being provided with data at a consistent rate, enabling it to complete its required processing within the strict TDM timeframe.

It will be evident to workers in the art that the embodiments of FIGURES 5-7 can be readily implemented by suitably modifying hardware, software or a combination thereof in conventional nodes of the type shown generally in FIGURES 1-4.

Although exemplary embodiments of the present invention have been described in detail, it will be understood by those skilled in the art that various modifications can be made therein without departing from the spirit and scope of the invention as set forth in the appended claims.

## Claims

1. A communication system, comprising:
a plurality of circuit-switched to packet-switched conversion nodes coupled to a packet-switched network for packet-switched communication with one another, said nodes having respective unique identifiers within said packet-switched network;
said nodes including respective outputs coupled to said packet-switched network for providing packet-switched traffic; and
each said node including a respective output router coupled to said output thereof, said output router having an input for receiving packet-switched messages to be sent to the other nodes, said output router for outputting said messages to the other nodes according to an output sequence based on a sequence of other said identifiers associated with the other nodes, said sequence beginning with the other identifier that is offset by a predetermined amount from the identifier of said each node and thereafter progressing according to a predetermined pattern through the remainder of the other identifiers.

2. The system of Claim 8, wherein all of said nodes concurrently output messages according to their respectively corresponding output sequences.

3. The system of Claim 8, wherein each said output router includes a routing portion coupled to said output and coupled to said input of said output router, said routing portion having an input for receiving information indicative of said output sequence, said output router also including a routing information provider coupled to said routing portion input for providing said output sequence information.

4. The system of Claim 10, wherein said routing portion includes a selector apparatus.

5. The system of Claim 11, wherein said selector apparatus is a multiplexer.

6. The system of Claim 10, wherein said routing information provider includes a state machine.

7. The system of Claim 13, wherein said state machine is a counter.

8. The system of Claim 10, wherein said routing information provider includes a look up table.

9. The system of Claim 8, wherein said packet-switched network includes an Ethernet switch.

10. The system of Claim 8, wherein said predetermined pattern includes an arithmetic progression.
